# EUROPÄISCHE PATENTSCHRIFT

(11) **EP 1 046 519 B1**
(45) Veröffentlichungstag und Bekanntmachung des Hinweises auf die Patenterteilung: **09.02.2005**
(21) Anmeldenummer: 00103373.7
(22) Anmeldetag: 23.02.2000
(51) Int. Cl.: B60F 1/00, B60F 1/04

(54) **Strassenfahrzeug für das Befahren von Strassen- und Schienenwegen**
Road vehicle adapted for road and rail operation
Véhicule de type routier adapté à circuler sur des routes et des chemins ferroviaires

(30) Priorität: 23.04.1999 DE 19918621
(43) Veröffentlichungstag der Anmeldung: 25.10.2000
(73) Patentinhaber: ZWEIWEG Schneider GmbH & Co. KG, 42799 Leichlingen (DE)
(72) Erfinder: Wagner, Josef, 42799 Leichlingen (DE); Bittermann, Richard, Dipl.-Ing., 83024 Rosenheim (DE)
(74) Vertreter: Borchert, Uwe Rudolf, Dipl.-Ing.

(56) Entgegenhaltungen:
- FR-A- 793 220
- US-A- 2 116 797

## Beschreibung

Die Erfindung betrifft ein Straßenfahrzeug für das Befahren von Straßen- und Schienenwegen gemäß der im Oberbegriff des Patentanspruches 1 angegebenen Art.

Aus der DE 44 43 943 A1 ist ein derartiges Straßenfahrzeug für das Befahren von Straßen- und Schienenwegen mittels luftbereifter Räder bekannt, denen für die Schienenfahrt die Führung bewirkende, mit Spurkränzen versehene Führungsrollen paarweise zugeordnet sind. Die Führungsrollen sind über an Schwenkarmen angreifende Stellmittel aus einer Ruhelage in eine mit den Schienen des Schienenweges in Eingriff stehende Arbeitslage schwenkbar. Hierbei ist ein Führungsrollenpaar als aktives Schienenfahrwerk ausgebildet und mit dem Antriebsmotor des Straßenfahrzeugs kraftschlüssig verbindbar.

Beim Befahren von Straßen sind die Führungseinrichtungen des Straßenfahrzeugs in ihrer Ruhelage über auf die Stellmittel einwirkende Sperrmittel starr fixiert.

Wird das Straßenfahrzeug auf den Schienen zum Ziehen oder Schieben eines oder mehrerer Waggons eingesetzt, so ist das Straßenfahrzeug auf die Schienen des Schienenweges aufzufahren und sind den beiden Führungsrollen der beiden Führungseinrichtungen mit ihren Spurkränzen über die jeweiligen Stellmittel sowie die Schwenkarme aus der Ruhelage nach Lösen der Sperrmittel in die Arbeitslage zu überführen. Die Arbeitslage ist dann erreicht, wenn die Spurkränze der Führungsrollenpaare im Eingriff mit den Schienen sind.

Dadurch führen die Führungseinrichtungen in diesem Betriebszustand das Straßenfahrzeug längs der Schienen des Schienenweges.

Wird das Straßenfahrzeug in Fahrbereichen benutzt, in denen an der Oberfläche der Schienen beispielsweise empfindliche Meßeinrichtungen angeordnet sind, die durch die von der Schiene überstehenden Räder beschädigt werden können, so wird die Winkellage der Schwenkarme und der Führungseinrichtung soweit verändert, bis die Räder von den Schienen genügend hoch angehoben sind. In diesem Betriebszustand wird das Straßenfahrzeug allein über die Führungseinrichtungen getragen, angetrieben und abgebremst.

Desweiteren ist beispielsweise aus der FR-A-793 220 bekannt, das Straßenfahrzeug mit einem Fahrzeugrahmen sowie mit einem mit dem Fahrzeugrahmen verbundenen Verstärkungsrahmen zu versehen, um sowohl vorne als auch hinten Anhängelasten aufnehmen zu können und Fahrten im Zugverband sowie Rangierarbeiten zu ermöglichen.

Der Fahrzeugrahmen ist nämlich hierfür allein nicht geeignet, da dieser für eine gewünschte Geländegängigkeit des Straßenfahrzeugs extrem verwindbar und elastisch ausgeführt ist, was auf Kosten der Längssteifigkeit in Fahrtrichtung geht. Zudem entsprechen die bekannten Straßenfahrzeuge nicht der von den Bahnbehörden vorgeschriebenen Rahmen-Knicksteifigkeit für den Rangierund Streckendienst.

Der Verstärkungsrahmen ist bei dieser bekannten Ausführungsform sowohl an der Vorderseite als auch an der Rückseite des Fahrzeugsrahmens fest mit diesem verbunden. An der Vorderseite und an der Rückseite sind jeweils Kupplungsmittel zum Anschließen eines Anhängers, Waggons o. ä. und Dämpfungsmittel zur Aufnahme von Druckkräften vorgesehen.

Der Verstärkungsrahmen verläuft hierbei unterhalb des Fahrzeugrahmens.

Nachteilig an dieser bekannten Konstruktion ist, daß der Fahrzeugrahmen durch den Verstärkungsrahmen vollständig versteift wird, wodurch die gewünschte Flexibilität des Fahrzeugrahmens verloren geht. Desweiteren wird die Bodenfreiheit des Straßenfahrzeugs erheblich eingeschränkt. Geländefahrten sind daher mit dem bekannten Straßenfahrzeug nur noch im eingeschränkten Umfange möglich.

Der Erfindung liegt die Aufgabe zugrunde, ein Straßenfahrzeug gemäß der im Oberbegriff des Patentanspruches 1 angegebenen Art derart weiterzubilden, daß unter Vermeidung der genannten Nachteile eine einfache Konstruktion für einen Verstärkungsrahmen angegeben wird, der die Eigenschaften des Fahrzeugrahmens nicht beeinträchtigt, jedoch einen Rangierdienst im wesentlichen ermöglicht.

Diese Aufgabe wird durch die kennzeichnenden Merkmale des Patentanspruches 1 in Verbindung mit seinen Oberbegriffsmerkmalen gelöst.

Der Erfindung liegt die Erkenntnis zugrunde, daß durch eine feste Verbindung des Verstärkungsrahmens mit dem Fahrzeugrahmen auf der einen Seite sowie durch eine lose Verbindung auf der dieser Seite gegenüberliegenden Seite des Fahrzeugrahmens der Verstärkungsrahmen die auftretenden Zug- und Druckkräfte während des Rangierens aufnimmt, ohne jedoch die Eigenschaften des Fahrzeugrahmens und somit die Geländegängigkeit und die Fahreigenschaft des Straßenfahrzeugs bei Geländefahrt zu beeinträchtigen.

Nach der Erfindung ist daher der Verstärkungsrahmen auf einer ersten Seite fest und auf einer zweiten Seite über ein Drehlager mit dem Fahrzeugrahmen verbunden, über das eine Drehung um zumindest eine, insbesondere horizontale, Achse ermöglicht wird. Hierbei ist insbesondere die erste Seite an der Frontseite und die zweite Seite an der Heckseite des Straßenfahrzeugs, oder umgekehrt, angeordnet.

Um den Fahrzeugrahmen möglichst unabhängig vom Verstärkungsrahmen bewegen zu können, ermöglicht das Drehlager sowohl eine Drehung um eine zur Längsachse des Fahrzeugs parallele Längsachse als auch eine Drehung um eine Achse senkrecht zur Längsachse. Vorzugsweise ist dabei das Drehlager in Form eines kugelförmigen Lagers ausgebildet.

Damit bei einer möglichen Durchbiegung des Fahrzeugrahmens im Gelände dieser durch den Verstärkungsrahmen nicht blockiert wird, ist das Drehlager entlang der Längsachse relativ zum Fahrzeugrahmen oder Verstärkungsrahmen verschiebbar gelagert.

Gemäß einer Ausführungsform der Erfindung umgreift der Verstärkungsrahmen den Fahrzeugrahmen vollständig. Hierdurch wird vermieden, daß die Bodenfreiheit des Straßenfahrzeugs eingeschränkt wird. Vielmehr befinden sich nunmehr Verstärkungsrahmen und Fahrzeugrahmen im wesentlichen in einer Ebene, wodurch auch die Kraftübertragung zwischen Verstärkungsrahmen und Fahrzeugrahmen optimiert ist.

Insbesondere liegen die Krafteinleitung, beispielsweise über Dämpfungsmittel, Kupplungsmittel o.ä., und der Verstärkungsrahmen im wesentlichen in einer Ebene.

Vorzugsweise weist hierfür der Verstärkungsrahmen zwei seitlich des Fahrzeugrahmens angeordnete Längsträger und eine frontseitige sowie eine heckseitige Querstrebe auf.

Um die Knicklänge der Längsträger erheblich zu verkürzen, ist zwischen frontseitiger und heckseitiger Querstrebe eine weitere, die beiden Längsträger des Verstärkungsrahmens verbindende Querstrebe vorgesehen.

Alternativ oder ergänzend hierzu verbindet gemäß einer weiteren Ausführungsform der Erfindung eine Platte die beiden Längsträger des Verstärkungsrahmens zwischen frontseitiger und heckseitiger Querstrebe. Über diese Platte wird nicht nur die Knicklänge der Längsträger erheblich eingeschränkt, sondern es können auch diagonale Kräfte zwischen den Längsträgern übertragen werden, wodurch der Verstärkungsrahmen insgesamt erheblich versteift wird. Hierbei ist die Platte insbesondere über Auflager jeweils mit einem Längsträger verbunden.

Gemäß einer Ausführungsform der Erfindung ist der Fahrzeugrahmen und/oder der Verstärkungsrahmen zur Längsachse symmetrisch ausgebildet.

Um die Kraftübertragung von Verstärkungsrahmen auf Fahrzeugrahmen zu optimieren, liegen der Verstärkungsrahmen und der Fahrzeugrahmen in einer Ebene.

Weitere Merkmale und Vorteile ergeben sich aus der nachfolgenden Beschreibung zweier Ausführungsformen der Erfindung im Zusammenhang mit der Zeichnung. Es zeigen:
- Fig. 1: eine schematische Draufsicht auf ein Straßenfahrzeug gemäß einer ersten Ausführungsform der Erfindung; und
- Fig. 2: eine schematische Draufsicht auf ein Straßenfahrzeug gemäß einer zweiten Ausführungsform der Erfindung.

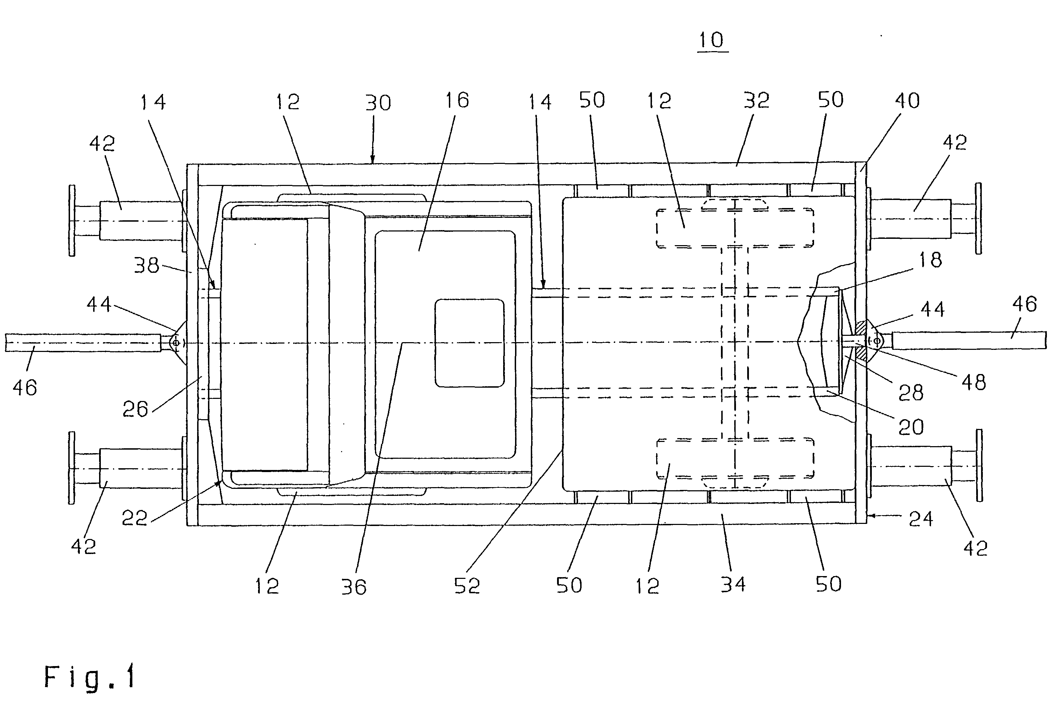

In Fig. 1 ist ein Straßenfahrzeug 10 für das Befahren von Straßen- und Schienenwegen mittels luftbereifter Räder 12 dargestellt.

In bekannter Weise ist das Straßenfahrzeug 10 mit einer, hier nicht dargestellten, Führungseinrichtung für die Vorder- und Hinterräder 12 versehen, die zwischen der Ruhelage und der Arbeitslage verschwenkbar sind. In diesem Zusammenhang wird beispielsweise auf die DE 44 43 943 A1 verwiesen.

Das Straßenfahrzeug 10 ist mit einem Fahrzeugrahmen 14 versehen, mit dem die Räder 12 und die Führungseinrichtung in bekannter Weise verbunden sind. Auf dem Fahrzeugrahmen 14 ist ein Fahrerhaus 16 aufgebracht, in dem die bekannten Aggregate eines Straßenfahrzeuges eingebracht sind.

Der Fahrzeugrahmen 14 besteht im wesentlichen aus zwei Längsträgern 18 und 20, die an der Frontseite 22 und an der Heckseite 24 des Straßenfahrzeugs 10 über einen Querträger 26 und 28 miteinander verbunden sind.

In Höhe des Fahrzeugrahmens 14 ist ein Verstärkungsrahmen 30 angeordnet. Der Verstärkungsrahmen 30 besteht aus zwei Längsträgern 32 und 34, die parallel zu den Längsträgern 18 und 20 des Fahrzeugrahmens 14 und somit zur Längsachse 36 des Straßenfahrzeugs 10 ausgerichtet sind.

Die Längsträger 32 und 34 sind an ihren Enden jeweils über eine Querstrebe 38, 40 miteinander verbunden. Die Querstrebe 38 an der Frontseite des Straßenfahrzeugs 10 ist mit dem Querträger 26 fest verschraubt. An der dem Fahrzeugrahmen 14 abgewandten Seite ist die Querstrebe 38 mit zwei symmetrisch zur Längsachse 36 vorgesehenen Federpuffern 42 versehen. Die Federpuffer 42 entsprechen den im Schienenverkehr üblichen Federpuffern und sind bei Schienenfahrt des Straßenfahrzeugs 10 in entsprechender Höhe der den Waggons zugeordneten Federpuffern angeordnet. Sie dienen zur Aufnahme von Druckkräften, die im Rangierbetrieb entstehen, beispielsweise wenn das Straßenfahrzeug 10 an einen Waggon heranfährt oder ein Waggon auf das Straßenfahrzeug 10 auftrifft.

Mittig an der Querstrebe 38 ist eine Kupplung 44 für eine Kupplungsstange 46 vorgesehen. Über die Kupplungsstange 46 wird das Straßenfahrzeug 10 beispielsweise mit einem Schienenwaggon verbunden, damit dieser durch das Straßenfahrzeug 10 rangiert, also geschoben oder gezogen, werden kann.

Die Querstrebe 40 ist über ein Lager in Form eines Drehzapfens 48 verbunden, der fest an den Fahrzeugrahmen 14 angeschlossen und auf diese Weise um die Längsachse 36 drehbar gelagert ist. Alternativ hierzu kann das Lager auch als kugelförmiges Lager ausgebildet sein, wodurch eine Drehung nicht nur um die Längsachse 36, sondern auch um weitere Achsen, wie senkrecht zur Längsachse 36, ermöglicht wird. Der Verstärkungsrahmen 30 ist somit vorne über die Verschraubung der Querstrebe 38 mit dem Querträger 26 sowie heckseitig über den Drehzapfen 48 mit dem Fahrzeugrahmen 14 verbunden.

Die Querstrebe 40 ist auf dem Drehzapfen 48 ebenfalls in axialer Richtung verschiebbar gelagert, um beispielsweise bei Durchbiegung des Fahrzeugrahmens 14 beispielsweise bei Geländefahrt eine entsprechende Ausgleichsbewegung durchführen zu können. Ansonsten wäre der Fahrzeugrahmen 14 durch den Verstärkungsrahmen 30 blockiert.

Entsprechend der Querstrebe 38 an der Frontseite 22 sind an der Querstrebe 40 an der Heckseite 24 ebenfalls Federpuffer 42 sowie eine Kupplung 44 mit Kupplungsstange 46 vorgesehen.

In der heckseitigen Hälfte des Straßenfahrzeugs 10 sind Auflager 50 an der Innenseite des Verstärkungsrahmens angebracht, die fest mit einer Platte 52 verbunden sind.

Hierdurch wird eine Verbindung zwischen den zwei Längsträgern 32 und 34 des Verstärkungsrahmens 30 zwischen den Querstreben 38 und 40 hergestellt, wodurch sich eine Diagonalverstrebung zur Verteilung einseitiger Längskräfte auf beide Längsträger ergibt. Zudem kann die Platte 52 als Montageplatte für Nebenaggregate, wie Kompressor, Luftbehälter usw., oder als Ladefläche verwendet werden. Eine unmittelbare Verbindung zwischen Platte 52 und Fahrzeugrahmen 14 ist jedoch nicht vorgesehen, da ansonsten wieder der Fahrzeugrahmen 14 blockiert wäre.

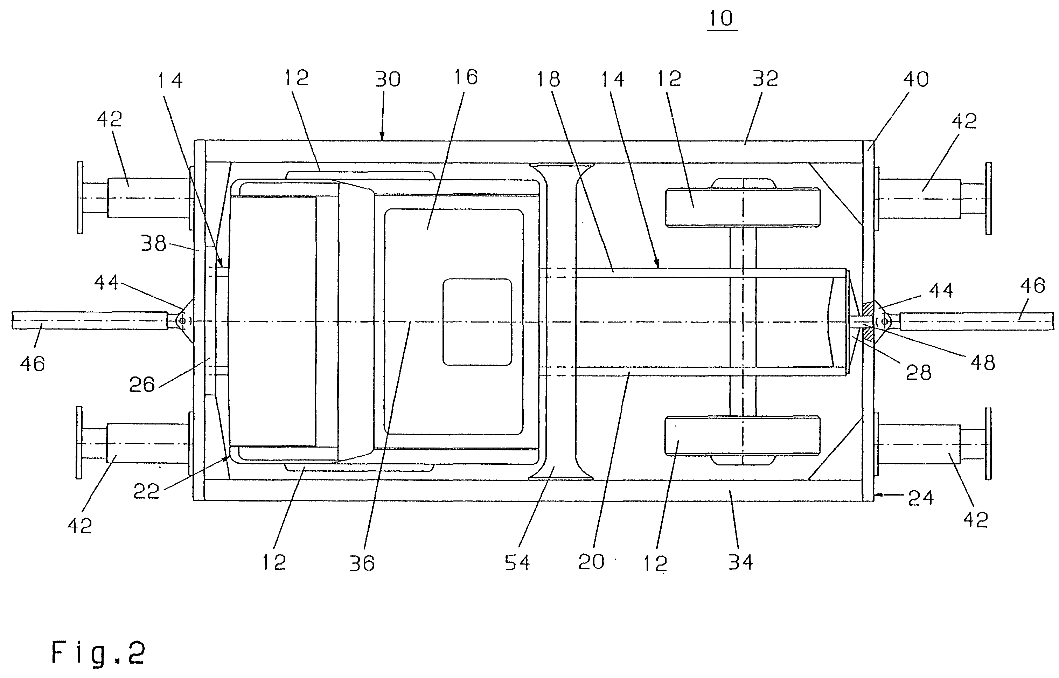

Eine alternative Ausführungsform ist in Fig. 2 dargestellt, wobei statt der Platte 52 hinter dem Fahrerhaus 16 eine weitere Querstrebe 54 vorgesehen ist, die die beiden Längsträger 32, 34 des Verstärkungsrahmens 30 verbindet. Auch durch diese Querstrebe 54 wird die Knicklänge des Verstärkungsrahmens 30 verkleinert und der Verstärkungsrahmen 30 zusätzlich versteift. Der Platz zwischen Querstrebe 54 und Querstrebe 40 kann für den Aufbau von zusätzlichen Geräten, wie Kran, Bagger oder Kastenaufbau für Arbeitsgeräte oder dergleichen, benutzt werden.

Die Erfindung zeichnet sich dadurch aus, daß durch die feste Verbindung auf der einen Seite und durch die lose Verbindung auf der anderen Seite von Verstärkungsrahmen 30 mit Fahrzeugrahmen 14 sowohl die Eigenschaften des Straßenfahrzeugs 10 nicht beeinträchtigt als auch die erforderliche Rahmen-Knicksteifigkeit für den Rangierund Streckendienst erreicht werden kann.

### Bezugszeichenliste

- 10: Straßenfahrzeug
- 12: Räder
- 14: Fahrzeugrahmen
- 16: Fahrerhaus
- 18: Längsträger - oben
- 20: Längsträger - unten
- 22: Frontseite
- 24: Heckseite
- 26: Querträger - Frontseite
- 28: Querträger - Heckseite
- 30: Verstärkungsrahmen
- 32: Längsträger
- 34: Längsträger
- 36: Längsachse des Straßenfahrzeugs
- 38: Querstrebe - Frontseite
- 40: Querstrebe - Heckseite
- 42: Federpuffer
- 44: Kupplung
- 46: Kupplungsstange
- 48: Drehzapfen
- 50: Auflager
- 52: Platte
- 54: weitere Querstrebe

## Patentansprüche

1. Straßenfahrzeug (10) für das Befahren von Straßen- und Schienenwegen mit einem Fahrzeugrahmen (14) und mit einem mit dem Fahrzeugrahmen (14) verbundenen Verstärkungsrahmen (30), der an seiner Vorderseite (22) und/oder seiner Rückseite (24) Kupplungsmittel (44, 46) zum Anschließen eines Anhängers, Waggons o. ä. und insbesondere Dämpfungsmittel, wie Federpuffer (42), zur Aufnahme von Druckkräften aufweist, **dadurch gekennzeichnet, daß** der Verstärkungsrahmen (30) auf einer ersten Seite (22) fest und auf einer zweiten Seite (24) über ein Drehlager (48) mit dem Fahrzeugrahmen (14) verbunden ist, über das eine Drehung um zumindest eine Achse ermöglicht wird.

2. Straßenfahrzeug nach Anspruch 1, **dadurch gekennzeichnet, daß** die erste Seite an der Frontseite (22) und die zweite Seite an der Heckseite (24) des Straßenfahrzeugs (10) oder umgekehrt angeordnet ist.

3. Straßenfahrzeug nach Anspruch 1 oder 2, **dadurch gekennzeichnet, daß** das Drehlager (48) eine Drehung um eine zur Längsachse (36) des Fahrzeugs parallele Länchsachse und eine Drehung um eine Achse senkrecht zur Längsachse ermöglicht.

4. Straßenfahrzeug nach Anspruch 3, **dadurch gekennzeichnet, daß** das Drehlager (18) in Form eines kugelförmigen Lagers ausgebildet ist.

5. Straßenfahrzeug nach Anspruch 3 oder 4, **dadurch gekennzeichnet, daß** das Drehlager (48) entlang der Längsachse (36) relativ zum Fahrzeugrahmen (14) oder Verstärkungsrahmen (30) verschiebbar gelagert ist.

6. Straßenfahrzeug nach einem der vorangehenden Ansprüche, **dadurch gekennzeichnet, daß** der Verstärkungsrahmen (30) den Fahrzeugrahmen (14) vollständig umgreift.

7. Straßenfahrzeug nach einem der vorangehenden Ansprüche, **dadurch gekennzeichnet, daß** die Krafteinleitung, beispielsweise über Dämpfungsmittel, Kupplungsmittel o.ä., und der Verstärkungsrahmen (30) im wesentlichen in einer Ebene liegen.

8. Straßenfahrzeug nach Anspruch 6 oder 7, **dadurch gekennzeichnet, daß** der Verstärkungsrahmen (30) zwei seitlich des Fahrzeugrahmens (14) angeordnete Längsträger (32, 34) und eine frontseitige sowie eine heckseitige Querstrebe (38, 40) umfaßt.

9. Straßenfahrzeug nach Anspruch 8, **dadurch gekennzeichnen,** daß zwischen frontseitiger und heckseitiger Querstrebe (38, 40) eine die beiden Längsträger (32, 34) des Verstärkungsrahmens (30) verbindende weitere Querstrebe (54) vorgesehen ist.

10. Straßenfahrzeug nach Anspruch 8 oder 9, **dadurch gekennzeichnet, daß** zwischen frontseitiger und heckseitiger Querstrebe (38, 40) eine Platte (52) vorgesehen ist, die beide Längsträger (32, 34) des Verstärkungsrahmens (30) verbindet.

11. Straßenfahrzeug nach Anspruch 10, **dadurch gekennzeichnet, daß** die Platte (52) über Auflager (50) mit einem Längsträger (32, 34) verbunden ist.

12. Straßenfahrzeug nach einem der vorangehenden Ansprüche, **gekennzeichnet durch** eine zur Längsachse (36) symmetrische Ausbildung des Verstärkungsrahmens (30) und/oder des Fahrzeugrahmens (14).

13. Straßenfahrzeug nach einem der vorangehenden Ansprüche, **dadurch gekennzeichnet, daß** der Verstärkungsrahmen (30) und der Fahrzeugrahmen (14) im wesentlichen in einer Ebene liegen.

## Claims

1. Road vehicle (10) for driving on roads and railway tracks, with a vehicle frame (14) and with a reinforcement frame (30) which is connected to the vehicle frame (14), the reinforcement frame (30) having, at its front (22) and/or rear (24), coupling means (44, 46) for connecting a trailer, waggon or similar, and in particular damping means such as spring buffers (42) for receiving compressive forces, **characterized in that** the reinforcement frame (30) is joined to the vehicle frame (14) fixedly on a first side (22), and via a pivot bearing (48), via which rotation around at least one axis is made possible, on a second side (24).

2. Road vehicle according to Claim 1, **characterized in that** the first side is arranged on the front side (22), and the second side is arranged on the rear side (24), or vice versa, of the road vehicle (10).

3. Road vehicle according to Claim 1 or 2, **characterized in that** the pivot bearing (48) makes possible both rotation around a longitudinal axis which is parallel to the longitudinal axis (36) of the vehicle, and rotation around an axis which is perpendicular to the longitudinal axis.

4. Road vehicle according to Claim 3, **characterized in that** the pivot bearing (18) is in the form of a spherical bearing.

5. Road vehicle according to Claim 3 or 4, **characterized in that** the pivot bearing (48) is carried so that it can move along the longitudinal axis (36) relative to the vehicle frame (14) or reinforcement frame (30).

6. Road vehicle according to one of the preceding claims, **characterized in that** the reinforcement frame (30) surrounds the vehicle frame (14) completely.

7. Road vehicle according to one of the preceding claims, **characterized in that** the force introduction, for instance via damping means, coupling means, or similar, and the reinforcement frame (30) are essentially in one plane.

8. Road vehicle according to Claim 6 or 7, **characterized in that** the reinforcement frame (30) has two longitudinal supports (32, 34) which are arranged to the sides of the vehicle frame (14), and a front and a rear transverse strut (38, 40).

9. Road vehicle according to Claim 8, **characterized in that** between the front and the rear transverse strut (38, 40) a further transverse strut (54) which joins the two longitudinal supports (32, 34) of the reinforcement frame (30) is provided.

10. Road vehicle according to Claim 8 or 9, **characterized in that** between the front and the rear transverse strut (38, 40), a plate (52) which joins the two longitudinal supports (32, 34) of the reinforcement frame (30) is provided.

11. Road vehicle according to Claim 10, **characterized in that** the plate (52) is connected to a longitudinal support (32, 34) via bearings (50).

12. Road vehicle according to one of the preceding claims, **characterized by** a form, which is symmetrical to the longitudinal axis (36), of the reinforcement frame (30) and/or the vehicle frame (14).

13. Road vehicle according to one of the preceding claims, **characterized in that** the reinforcement frame (30) and vehicle frame (14) are essentially in one plane.

## Revendications

1. Véhicule de type routier (10) adapté à circuler sur des routes et des chemins ferroviaires ayant un châssis de véhicule (14) et un châssis de renforcement (30) relié au châssis de véhicule (14), qui présente sur son côté avant (22) et/ou son côté arrière (24) des moyens d'attelage (44, 46) pour l'accrochage d'une remorque, d'un wagon ou autre, et en particulier des moyens d'amortissement, tels que des tampons élastiques (42), pour l'absorption de forces de pression, **caractérisé en ce que** le châssis de renforcement (30) est relié au châssis du véhicule (14) d'une premier côté (22) de façon fixe et d'un deuxième côté (24) par le biais d'un coussinet de pivotement (48), qui permet une rotation autour d'au moins un axe.

2. Véhicule de type routier selon la revendication 1, **caractérisé en ce que** le premier côté est agencé sur le côté avant (22) et le deuxième côté sur le côté arrière (24) du véhicule de type routier (10) ou inversement.

3. Véhicule de type routier selon l'une quelconque des revendications 1 ou 2, **caractérisé en ce que** le coussinet de pivotement (48) permet une rotation autour d'un axe longitudinal parallèle à l'axe longitudinal (36) du véhicule et une rotation autour d'un axe perpendiculaire à l'axe longitudinal.

4. Véhicule de type routier selon la revendication 3, **caractérisé en ce que** le coussinet de pivotement (48) est réalisé dans la forme d'un coussinet sphérique.

5. Véhicule de type routier selon l'une quelconque des revendications 3 ou 4, **caractérisé en ce que** le coussinet de pivotement (48) est monté de façon coulissante le long de l'axe longitudinal (36) par rapport au châssis du véhicule (14) ou au châssis de renforcement (30).

6. Véhicule de type routier selon l'une quelconque des revendications précédentes, **caractérisé en ce que** le châssis de renforcement (30) intègre entièrement le châssis du véhicule (14).

7. Véhicule de type routier selon l'une quelconque des revendications précédentes, **caractérisé en ce que** l'introduction de forces, par exemple par le biais de moyens d'amortissement, de moyens d'attelage ou autres, et le châssis de renforcement (30) se trouvent essentiellement dans un plan.

8. Véhicule de type routier selon l'une quelconque des revendications 6 ou 7, **caractérisé en ce que** le châssis de renforcement (30) comprend deux longerons (32, 34) agencés en position latérale du châssis du véhicule (14) ainsi qu'une entretoise avant et une entretoise arrière (38, 40).

9. Véhicule de type routier selon la revendication 8, **caractérisé en ce qu'**une entretoise supplémentaire (54) reliant les deux longerons (32, 34) du châssis de renforcement (30) est prévue entre l'entretoise avant et l'entretoise arrière (38, 40).

10. Véhicule de type routier selon l'une quelconque des revendications 8 ou 9, **caractérisé en ce qu'**une plaque (52) est prévue entre l'entretoise avant et l'entretoise arrière (38, 40), laquelle relie les deux longerons (32, 34) du châssis de renforcement (30).

11. Véhicule de type routier selon la revendication 10, **caractérisé en ce que** la plaque (52) est reliée à un longeron (32, 34) par le biais de supports (50).

12. Véhicule de type routier selon l'une quelconque des revendications précédentes, **caractérisé par** une réalisation symétrique par rapport à l'axe longitudinal (36) du châssis de renforcement (30) et/ou du châssis du véhicule (14).

13. Véhicule de type routier selon l'une quelconque des revendications précédentes, **caractérisé en ce que** le châssis de renforcement (30) et le châssis du véhicule (14) se trouvent essentiellement dans un plan.
